# EUROPÄISCHE PATENTANMELDUNG

(11) **EP 4 818 305 A1**
(43) Veröffentlichungstag der Anmeldung: **07.10.2026**
(21) Anmeldenummer: 26170618.8
(22) Anmeldetag: 02.04.2026
(51) Int. Cl.: C12H 3/02, A23L 2/00, A23L 2/64

(54) **VERFAHREN ZUR HERSTELLUNG VON QUALITATIV HOCHWERTIGEN ALKOHOLFREIEN GETRÄNKEN AUS ALKOHOLISCHEN AUSGANGSGETRÄNKEN**

(30) Priorität: 02.04.2025 DE 102025112978
(71) Anmelder: Barka, Günes, 61381 Friedrichsdorf (DE)
(72) Erfinder: Barka, Günes, 61381 Friedrichsdorf (DE); Schulz, Hartwig, 14532 Stahnsdorf (DE)
(74) Vertreter: Boult Wade Tennant LLP

(57) **Zusammenfassung**

Verfahren zur Herstellung von alkoholfreien Getränken, wobei zunächst aus einem alkoholhaltigen Ausgangsgetränk (10) der Alkohol unter Verwendung von Vakuumverdampfung als Destillat weitestgehend entfernt wird, so dass ein alkoholfreier Rückstand hergestellt wird. Um ein alkoholfreies Getränk mit einem jeweils authentischen Aromaeindruck herstellen zu können, wird vorgeschlagen, dass das Alkoholdestillat mittels einer auf die Destillation folgenden Rektifikation (22) fraktioniert wird, wobei die Aromen des jeweiligen Ausgangsgetränks von dem Alkohol getrennt werden, indem das Alkoholdestillat in drei Fraktionen separiert wird, nämlich eine erste Fraktion mit einem Siede-punkt unterhalbe des Siedepunktes von Ethanol, eine zweite Fraktion mit einem dem Ethanol entsprechenden Siedepunkt bei 78,3 °C (+/- 0,2 °C bezogen auf Normaldruck) und eine dritte Fraktion mit einem Siedepunkt oberhalb des Siedepunktes von Ethanol, wobei die erste und die dritte Fraktion dem alkoholfreien Rückstand des Ausgangsgetränks wieder zugeführt werden.

## Beschreibung

Die Erfindung betrifft gemäß dem Oberbegriff von Anspruch 1 ein Verfahren zur Herstellung von alkoholfreien Getränken, wobei zunächst aus einem alkoholhaltigen Ausgangsgetränk der Alkohol unter Verwendung von Vakuumverdampfung als Destillat weitestgehend entfernt wird, so dass ein alkoholfreier Rückstand hergestellt wird.

Zur Stillung der Nachfrage nach alkoholfreien Varianten von am Markt verfügbaren alkoholischen Getränken, wie z.B. Wein, Sekt oder auch Spirituosen (Branntwein, Calvados, Gin, Vodka, Whisky...), wird zumeist durch ein destillatives Verfahren das durch den Gärungsprozess gebildete Ethanol entzogen. Allerdings führt diese destillative Abtrennung generell zu einer drastischen Veränderung des Aromaprofils bzw. zum Verlust der jeweils typischen Aroma- und Geschmacksnote. Generell wird im Folgenden die Bezeichnung Alkohol gleichbedeutend mit Ethanol verwendet.

Grundsätzlich sind Verfahren zur Entalkoholisierung von alkoholischen Getränken, insbesondere auch Weinen, seit langer Zeit bekannt. Als Beispiele kann auf die US 1 071 238 A, die DE 3777 406 A, die FR 541 873 A, die DE 14 42 238 A, die DE 24 34 313 A1 und die US 9 249 381 B2 verwiesen werden.

Bei den zurzeit praktizierten Verfahren werden z.B. Weine mit einem Ethanolgehalt zwischen 10 und 15 % (v/v) unter schonenden Bedingungen bei einem Absolutdruck von ca. 0,1-0,2 bar im Temperaturbereich von ca. 30-60 °C destilliert und dabei das im Wein enthaltene Ethanol weitgehend abgetrennt. Die nach diesem Verfahrensschritt resultierenden Wein-Produkte enthalten immer noch einen Ethanolgehalt von etwa 0,1-0,5 % (v/v). Dieser Basisschritt wird auch für das hier erörterte Verfahren genutzt, wobei dieser Schritt nicht zwingend auf die vorstehend erörterten Eckdaten beschränkt sein muss. Mit alkoholfreien Getränken oder alkoholfreien Weinen sind im Folgenden alle Getränke mit einem Alkoholgehalt von weniger als 0,5 % (v/v) gemeint, ggf. auch Getränke ganz ohne Alkohol.

Bei der Herstellung der entalkoholisierten Weine haben sich derzeit die unterschiedlich großen Anlagen der australischen Firma Flavourtech etabliert, die die sogenannte "spinning cone"-Technik anwenden. Durch diese Anlagen ist es möglich, größere Gebinde kontinuierlich zu entalkoholisieren. Dabei fällt ein Ethanol/Wasser-Gemisch an, das nochmals auf eine Verkaufskonzentration des Ethanols von ca. 80% verarbeitet werden muss. Alkoholgehalte unter 80% lassen sich nicht sinnvoll verwerten.

Bei diesem kontinuierlichen Verfahren gehen sowohl die leichtflüchtigen als auch die schwerflüchtigen Aromen und Geruchsstoffe verloren und befinden sich in dem besagten Ethanol-Wasser-Gemisch. Mit anderen Worten befinden sich sowohl die Duft- und Riechstoffe als auch die Geschmacksstoffe in diesem Destillat, die etwa ein Zehntel bis Fünftel des Ausgangsvolumens (Ausgangswein mit 10-15% Ethanol) entspricht.

Aus der EP 070 845 B1 ist es bekannt, das in einem ersten Schritt erzeugte, das Ethanol enthaltende Destillat zur Erhöhung des Ethanolgehalts einer Fraktionierung zu unterziehen, wobei nur die Aromafraktionen oberhalb des Siedepunktes von Ethanol zur Geschmacksverbesserung rückgeführt werden. Letztlich wird nach dem dort beschriebenen Verfahren auch immer destilliertes Wasser beigegeben, was in einigen Ländern z.B. dann gar nicht zulässig wäre, wenn man das Endprodukt als Wein unter eben dieser Bezeichnung vermarkten wollte.

Alkoholische Getränke, insbesondere fertig fermentierte, trinkfertige Weine, zu denen neben Rot- und Weißweinen auch Sekte gezählt werden, enthalten außer ca. 85 bis 90 % (v/v) Wasser auch noch bis zu 15 % oder mehr Ethanol sowie zahlreiche Spurenkomponenten, die hauptsächlich im Verlauf der Weinherstellung gebildet werden und in unterschiedlichem Ausmaß einen Beitrag zur Aromaqualität des jeweiligen Weins liefern.

Bei dem Begriff "Aromaqualität" wird bei der sensorischen Verkostung prinzipiell zwischen Geschmack- und Geruchs-/Duftstoffen unterschieden, wobei unter den Geschmackstoffen allgemein diejenigen chemischen Substanzen verstanden werden, die durch die überwiegend auf der Zunge befindlichen Rezeptoren für süß, sauer, salzig, bitter und Umami wahrgenommen werden. Bei den Geschmackstoffen handelt es sich vor allem um weniger flüchtige Substanzen wie z.B. Zucker, Aminosäuren und phenolische Substanzen, die nach der destillativen Abtrennung von Ethanol noch im Destillationsrückstand verbleiben.

Durch jüngere Forschungsergebnisse wurde festgestellt, dass sich die Geschmacksrezeptoren nicht nur auf der Zunge befinden, sondern einige auch über den gesamten Mundraum (Rachen, Kehldeckel und oberer Teil der Speiseröhre) verstreut anzutreffen sind.

Bei einer einfachen destillativen Entfernung von Ethanol (auch bei niedrigen Temperaturen im Vakuum) gehen für den jeweiligen Aromaeindruck wichtige Komponenten, wie bereits erwähnt, weitgehend verloren, sodass es nicht verwundert, dass die auf diese Weise erzeugten Wein-Produkte nur eine Nische einnehmen können. Mit dem Ziel, diesen signifikanten Wettbewerbs-Nachteil hinsichtlich der Aroma-Qualität sowie einen teilweise als sauer bezeichneten Fehlgeschmack auszugleichen, setzen einige Produzenten oftmals dem Wein nach der Ethanol-Abtrennung unvergorenen Traubensaft zu, wodurch es zu einer weiteren Verfälschung der ursprünglichen Geschmacksnuancen kommt. Es lässt sich auch durch gaschromatographische Untersuchungen belegen, dass sich durch den nachträglichen Zusatz von unvergorenem Traubenmost zu einem entalkoholisierten Wein niemals dieselbe Komplexität an Geruchs- und Geschmacksstoffen erzielen lässt, wie in einem konventionell durch Fermentation erzeugten Wein.

Die Aufgabe der vorliegenden Erfindung besteht darin, ein Verfahren zur Herstellung alkoholfreier Getränke zu schaffen, deren Aromaprofil näher an denen der alkoholischen Ausgangprodukte liegt.

Erfindungsgemäß wird die Aufgabe durch ein Verfahren der eingangs genannten Art gelöst, bei welchem das im ersten Schritt gewonnene Alkoholdestillat mittels Rektifikation fraktioniert wird, wobei Aromen des jeweiligen Ausgangsgetränks (z.B. Wein) von dem Alkohol getrennt werden, indem das Alkoholdestillat in drei Fraktionen separiert wird, nämlich eine erste Fraktion mit einem Siedepunkt unterhalb des Siedepunktes von Ethanol, vorzugsweise bis 78,2°C (+/-0,1°C - bezogen auf Normaldruck), eine zweite Fraktion mit einem dem Ethanol entsprechenden Siedepunkt von 78,3 C (+/- 0.2 °C bezogen auf Normaldruck) und eine dritte Fraktion mit einem Siedepunkt oberhalb des Siedepunktes von Ethanol, vorzugsweise über 78,4 °C (+/-0,1 °C - bezogen auf Normaldruck), wobei die erste und die dritte Fraktion dem alkoholfreien Rückstand des Ausgangsgetränks wieder zugeführt werden.

Es gilt zu erwähnen, dass die mittlere Fraktion auch Wasser enthält.

Die erfindungsgemäße Lösung bietet den Vorteil, dass bei den hergestellten alkoholfreien Getränken einerseits der Rest-Ethanolgehalt bis auf Spuren von < 0.5 % abgesenkt wird, andererseits aber das komplexe Aroma insbesondere von Weinen ohne etwaige Zusätze von Fruchtsäften oder natürlichen Aromastoffe weitgehend in seiner Ursprünglichkeit erhalten werden kann.

Mit dieser Ausgestaltung der Auftrennung in drei Fraktionen ist eine gezielte Abscheidung der zweiten Fraktion, nämlich des im Endprodukt unerwünschten Alkohols ermöglicht, während die zuvor mit dem Ethanol verloren gegangenen Aromafraktionen zurückgewonnen und dem alkoholfreien Rückstand wieder zurückgegeben werden können.

Die genannten Temperaturwerte dienen nur als Bezugspunkte für die Trennung der Fraktionen, sie bedeuten nicht, dass die Fraktionierung durch eine Temperaturüberwachung gesteuert sein muss. Insbesondere vor dem Hintergrund, dass die Fraktionierung ebenso wie die ursprüngliche Destillation auf einem Niederdruckniveau stattfindet, um sie bei auf einem schonenderen niedrigeren Temperaturniveau durchführen zu können, versteht es sich, dass die tatsächlichen Temperaturen bei der Durchführung des Verfahrens ohnehin deutlich niedriger liegen.

Die allgemein als Duft- oder Aromastoffe bezeichneten Komponenten werden über die Riechschleimhaut (Regio olfactoria) mit ihren etwa 400 spezifischen Rezeptoren wahrgenommen (man spricht hierbei auch oftmals von dem "retronasalen" Geschmack). Bei den hierbei relevanten Aromastoffen handelt es sich in der Regel um kleinere, zumeist lipophile Moleküle, die überwiegend gut in Ethanol, jedoch nur im geringen Ausmaß in Wasser löslich sind. Bei der Aromawahrnehmung dient Ethanol diesen auch als "Lösungsvermittler", indem er die zumeist kaum in Wasser löslichen Aromastoffe (wie z.B. Mono-, Sequi- und Diterpen-Kohlenwasserstoffe) an das Riechepithel heranführen kann und auf diese Weise überhaupt ein Rezeptor-Signal (als Aroma-Wahrnehmung) über den Riechnerv zum Gehirn weiterleiten kann.

Nach der herkömmlichen destillativen Entfernung des Alkohols durch eine einfache Vakuumdestillation wird also in einem zweiten Schritt die erhaltene Alkohol-Fraktion, die im Wesentlichen die oben angeführten Wein-Aromastoffe (bzw. die spezifischen Aromastoffe eines anderen Ausgangsgetränks) enthält, nochmals mittels sog. fraktionierter Destillation oder Rektifikation bei genauer Temperaturüberwachung in die jeweiligen Bestandteile aufgetrennt und die einzelnen Komponenten separat in einem Fraktionssammler aufgefangen. In einem letzten Schritt werden dann die aufgefangenen Aromastoffe dem bereits weitgehend entalkoholisiertem Wein wieder hinzuzugefügt.

Somit können die bisher im Wege des Entfernens des Alkohols weitgehend verloren gegangenen Duft- und Aromastoffe können somit für das alkoholfreie Endprodukte erhalten werden, wodurch auch das ursprüngliche Geschmacks- und Aromabild des Ausgangsgetränks erhalten bleibt. Insbesondere bei Weinen hat sich das erfindungsgemäße Verfahren als vorteilhaft erwiesen, um die für Weine charakteristischen Geruchs- und Geschmacksstoffe im entalkoholisierten Endprodukt besser zu erhalten und damit die Qualität zu verbessern.

In der Regel ist es zweckmäßig, dass die erste Fraktion einen unteren Siedepunkt von ca. 70 °C (bezogen auf Normaldruck) und/oder die dritte Fraktion einen Siedepunkt von maximal ca. 85 °C (bezogen auf Normaldruck) aufweist, d.h. also, dass eine nicht genutzte weitere Fraktion mit einem Siedepunkt unter 70°C gebildet, aber nicht genutzt wird, während eine letzte Fraktion mit einem Siedepunkt über 85 °C, die unter anderem Wasser enthalten kann, ebenfalls nicht genutzt wird. Hierdurch können diese Fraktionen auf die für den Geschmack des jeweiligen alkoholfreien Endproduktes wesentlichen Aroma-Komponenten begrenzt werden.

In einer besonders bevorzugten Weiterbildung des Verfahrens ist vorgesehen, dass die Rektifikation mittels einer Spektralanalyse kontinuierlich überwacht wird, wobei das Destillat der ersten und dritten Fraktion nur so lange zur späteren Zuführung zu dem alkoholfreien Rückstand des Ausgangsprodukts separiert wird, solange das für Ethanol charakteristische optische Spektrum im Destillat nicht vorliegt.

Es hat sich gezeigt, dass durch die Anwendung einer spektroskopischen Analyse während der Fraktionierung eine noch schärfere Abtrennung der ersten Fraktion und der dritten Fraktion erreicht werden kann und so weitere Geruchs- und Geschmacksstoffe des Weines erhalten werden können, da die Abtrennung entsprechend dem Istzustand des Destillats während der Fraktionierung und nicht anhand eines zuvor festgelegten Temperaturniveaus erfolgt. Hierdurch relativieren sich auch die zuvor genannten Grenzwerte für die Temperaturen zwischen den Fraktionen.

Besonders bevorzugt ist eine Weiterbildung des Verfahrens, die vorsieht, dass in einer Software die bekannten optischen Spektren des Ethanols und/oder Wassers hinterlegt und die die Spektren der Geruchs- und Geschmacksstoffe überdeckenden Anteile herausgerechnet werden, so dass durch kontinuierliche Auswertung der Vorgang der Destillation der Geruchs- und Geschmacksstoffe gesteuert und das Ethanoldestillat von den Geruchs- und Geschmacks-stoffen separiert wird.

Hierdurch ist es möglich, insbesondere die die Spektren der wertvollen Geruchs- und Geschmacksstoffe überdeckenden Teile der optischen Spektren von Ethanol und Wasser herauszufiltern, so dass die Trennung in besonders scharfer Form durchgeführt werden kann.

Dies kommt auch der Qualität des als zweite Fraktion erzeugten Ethanols zugute, da dieses weniger Begleitstoffe enthält, die z.B, bei einer industriellen Verwertung unerwünscht sind.

Für die Spektroskopie hat es sich als besonders vorteilhaft erwiesen, dass zur Spektralanalyse eine RAMAN-Spektroskopie mit einer RAMAN-Sonde eingesetzt wird, wobei die Rektifikation mittels der Spektralanalyse manuell oder mittels der Software überwacht und gesteuert wird.

Der Vorteil der RAMAN-Spektroskopie liegt darin, dass die Investionskosten für ein geeignetes System im Vergleich zu anderen Technologien sehr günstig sind und auch die Anwendung selbst nicht durch hochqualifizierte Wissenschaftler durchgeführt werden muss.

Alternativ können auch andere Verfahren, z.B. in Kombination ein Kapillar-Gaschromatograph verbunden mit einem kleinen Massenspektrometer eingesetzt werden, die auf dem Markt als kostengünstige Tischgeräte zur Verfügung stehen. Es hat sich überaschenderweise gezeigt, dass auch eine solche Kombination für den Echtzeiteinsatz in der vorliegenden Anwendung geeignet ist, auch hier wird dem Nutzer sofort anzeigt, wenn die Fraktion der Riechstoffe zu Ende destilliert worden sind und der Alkohol anfängt zu destillieren,

In einer besonders bevorzugten Ausführungsform der Erfindung ist vorgesehen, dass die Rückführung der Aromafraktionen, insbesondere der lipophilen Aromastoffe, mittels Hochdruck- und/oder Ultraschalldispersion durchgeführt wird.

Obwohl, wie oben bereits angeführt, die Aromastoffe eigentlich kaum in Wasser löslich sind und deren Gehalt zudem vergleichsweise eher gering ist, gelingt es, diese für das natürliche Weinaroma oder das Aroma anderer alkoholischer Getränke wichtigen Komponenten mit dieser Ausgestaltung des Verfahrens in dem weitgehend ethanolfreien Wein bzw. einem anderen Ausgangsgetränk wieder nahezu vollständig in Lösung zu bringen.

Durch diese Maßnahme wird erreicht, dass die überwiegend lipophilen und wasserunlöslichen Aromastoffe in dem alkoholfreien Wein dispers (in Form kleinster Tröpfchen) eingebunden werden.

Die Hochdruckdispersion kann beispielsweise in der Weise ausgestaltet sein, dass mittels einer Hochdruckpumpe ein Druck von bis zu 400 bar erzeugt wird und die rückzuführenden, separierten Aroma-Fraktionen mittels einer Düse zerstäubt und dem alkoholfreien Weinrückstand wieder zugeführt werden.

Eine andere Variante der Rückführung kann vorsehen, dass mittels eines Ultraschallgerätes Nanopartikel-Dispersionen hergestellt und diese dem alkoholfreien Weinrückstand wieder zugeführt werden.

In einer besonders bevorzugten Weiterbildung des Verfahrens ist vorgesehen, dass der alkoholfreie Rückstand während des dispersen Rückführens der Aromafraktionen gerührt wird.

Durch diese einfache zusätzliche Maßnahme wird der Dispersionsvorgang optimiert.

In einer besonders bevorzugten Ausführungsform des Verfahrens ist vorgesehen, dass die Rektifikation unter einem verminderten Druck von ca. 0,1 - 0,2 bar (absolut) und einem entsprechend verminderten Temperaturniveau durchgeführt wird. Hierdurch wird eine Beeinträchtigung des Geschmacks des Endproduktes durch den bei höheren Temperaturen auftretenden Verlust wertgebender Aromastoffe vermieden, der nicht nur bei der im ersten Schritt erfolgenden Entalkoholisierung, sondern auch bei der erfindungsgemäßen nachgelagerten Rektifikation auftreten kann, wenn ein zu hohes Temperaturniveau gewählt wird.

In einer bevorzugten Weiterbildung des Verfahrens ist vorgesehen, dass die Rektifikation in einer Füllkörperkolonne durchgeführt wird, wobei eine Weiterbildung dahingehend besonders bevorzugt ist, dass die Füllkörperkolonne mit Glaskörpern, Keramikkörpern oder Metallkörpern befüllt ist.

Die Füllkörper können beispielsweise als Ringkörper ausgebildet sein.

Besonders bevorzugt ist hierbei eine Ausgestaltung, nach welcher die Glaskörper oder auch sonstigen Füllkörper der Kolonne einen Durchmesser zwischen 1 und 5 mm aufweisen.

Die Durchmesser/Größe der Füllkörper haben einen Einfluss auf die Rektifikationsleistung der Füllkörperkolonne.

Wird beispielsweise bei einer olfaktorischen Überprüfung der volumenmäßig größten zweiten Fraktion, die insbesondere bei noch unbekannten Weinen (bzw. anderen alkoholischen Ausgangsgetränken) regelmäßig erfolgen sollte, festgestellt, dass diese bestimmte Riechstoffe enthält, kann durch eine Verkleinerung der in der Füllkörperkolonne eingefügten Glaskörper die Rektifikationsleistung verbessert werden, da auf diese Weise die Anzahl der "theoretischen Böden" als Maß für die Trennleistung erhöht wird. In der Praxis reichen in der Regel Durchmesser von 3-5 mm völlig aus, um den gewünschten Trenneffekt zu erzielen.

Wie erwähnt, eignet sich das erfindungsgemäße Verfahren insbesondere zur Herstellung alkoholfreier Weine und Sekte, grundsätzlich ist es aber auch möglich, jegliche Art von alkoholischen Getränken unter Erhaltung der geschmacklichen Besonderheiten in eine alkoholfreie Variante zu überführen.

Weitere Merkmale, Einzelheiten und Vorteile der Erfindung ergeben sich aus dem Wortlaut der Ansprüche sowie aus dem nachfolgend anhand der Zeichnungen beschriebenen Ausführungsbeispiel. Es zeigen:
Fig. 1 ein Schaubild einer diskontinuierlichen Rektifikation zur Abtrennung der flüchtigen Wein-Bestandteile;
Fig. 2 eine schematische Ansicht einer Füllkörperkolonne zur Auftrennung der flüchtigen Wein-Bestandteile;
Fig. 3 ein schematisches Schaubild der Hochdruck-Dispergierung separierter Aroma-Fraktionen.

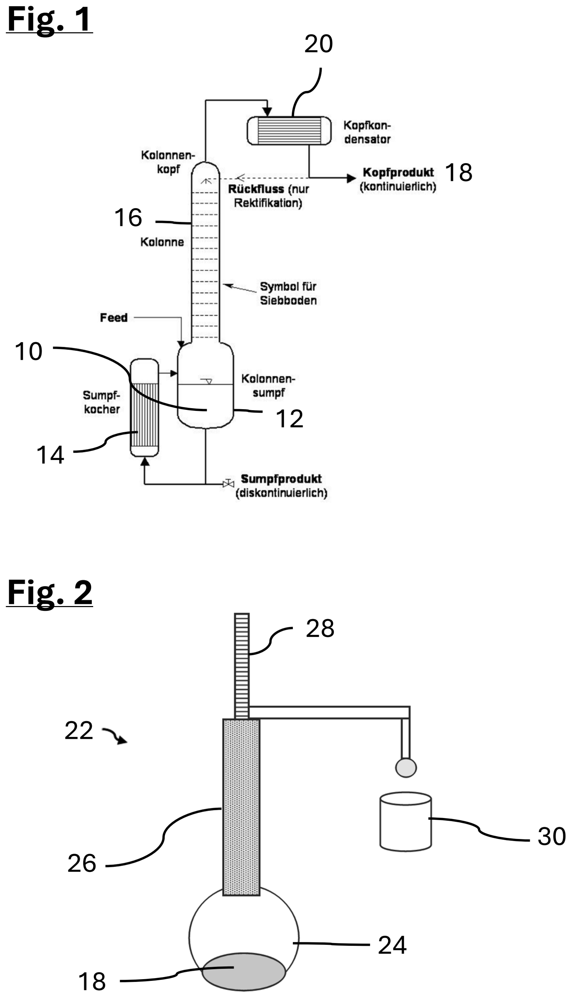

Fig. 1 zeigt allgemein ein Schaubild eines zurzeit praktizierten Verfahrens, bei welchem Weine mit einem Ethanolgehalt zwischen 10 und 15 % (v/v) unter schonenden Bedingungen bei einem Druck von ca. 0,1-0,2 bar (absolut) im Temperaturbereich von ca. 30-60 °C destilliert und dabei der im Wein enthaltene Ethanol weitgehend abgetrennt wird. Die nach diesem Verfahrensschritt resultierenden Wein-Produkte, die in Fig. 1 als "Kopfprodukt" bezeichnet sind, enthalten immer noch einen Ethanolgehalt von etwa 0,1-0,5 % (v/v). Grundsätzlich findet dieser erste Verarbeitungsschritt auch bei dem erfindungsgemäßen Verfahren Anwendung.

Bei dem Verfahren wird das Ausgangsprodukt, im vorliegenden Fall ein Weinprodukt (10) einem Kolonnensumpf (12) zugeführt und mittels eines Sumpfkochers (14) erwärmt. Bei der zuvor beschriebenen Temperatur- und Druckführung werden hier in einer Siebbodenkolonne (16) die höher siedenden Bestandteile abgeschieden und in den Sumpf (12) zurückgeführt. Das Kondensat (18), das neben dem Alkohol (Ethanol) auch die flüchtigen Aromastoffe mit eher niedrigem Siedepunkt <85 °C (bezogen auf Normaldruck) enthält, wird in einem Kopfkondensator (20) abgeschieden.

Der Verfahrensschritt zur Abscheidung des Alkohols (Ethanol) ist hier nur am Beispiel einer aus dem Stand der Technik bekannten Lösung gezeigt und kann grundsätzlich in jeder anderen Art und Weise durchgeführt werden.

Der Alkohol (Ethanol) wird durch das Verfahren der Vakuumverdampfung also zunächst entfernt, wobei die Temperatur während des Prozesses unterhalb des Siedepunkts des Alkohols bleibt, um die niedrig siedende Aromakomponenten im Wein möglichst vollständig im Produkt zu erhalten.

Bei einem Vergleich von mittels Gaschromatografie analysierten Aromastoff-Profilen von konventionell hergestelltem Wein und einem alkoholfreien, mit Traubensaft "aromatisierten" WeinProdukt zeigt sich eindeutig, dass der nach herkömmlicher Weise produzierte Wein eine Vielzahl an Aromakomponenten beinhaltet, während im alkoholfreien Produkt insgesamt deutlich weniger GC-Signale der relevanten Wein-Aromastoffe detektiert werden.

Dies belegt, dass durch den nachträglichen Zusatz von unvergorenem Traubenmost zu einem entalkoholisierten Wein niemals dieselbe Komplexität an Geruchs- und Geschmacksstoffen erzielt werden kann wie in einem konventionell durch Fermentation erzeugten Wein.

In Fig. 2 ist ein neuer weiterer Verfahrensschritt für die Rektifikation des Kopfproduktes, also des entalkoholisierten Weines aus Fig. 1 gezeigt. Das Verfahren nutzt hierzu eine innovative Rektifikationssmethode, die es erlaubt, die für das jeweilige Weinaroma verantwortlichen Aromakomponenten aus dem Kopfprodukt (18) zuverlässig von Ethanol abzutrennen und nach Abschluss des Prozesses dem weitgehend alkoholfreien Wein, der dem Kolonnensumpf (12) aus Fig. 1 entnommen wird, wieder zuzusetzen. Die hierzu eingesetzte, in Fig. 2 schematisch gezeigte Rektifikationsanlage (22), besitzt einen Kolonnensumpf (24) mit einer Temperatur- und Druckregelung, um die später noch zu erörternden Bedingungen für die zu separierenden Fraktionen einstellen zu können.

Eine Füllkörperkolonne (26) ist mit kleinen Glasringen mit 1-2 mm Durchmesser bestückt (es können auch andere Körper und größere Durchmesser bis wenigstens 5 mm eingesetzt werden). Alternative zu einem Thermometer zur Temperaturüberwachung der jeweils verdampften Fraktion, die in einem Fraktionssammler (30) aufgefangen wird, ist hier einer RAMAN-Sonde (28) zur Echtzeitanalyse des bei der Rektifikation entstehenden Destillats vorgesehen.

Im vorliegenden Verfahren werden also die leichtflüchtigen und schwerflüchtigen Anteile, die bei einer Aufkonzentration des Ethanols **(2. Destillation)** aufgefangen werden, nochmals in einer wesentlich kleineren Anlage unter kontinuierlicher Aufnahme und Kontrolle der optischen (hier als Beispiel RAMAN-) Spektra durchgeführt, wobei die erste und dritte Fraktion mit einem Volumen von wenigen Millilitern aufgefangen werden. In dieser zweiten Destillationsanlage wird die fraktionierte Destillation nicht wie üblich mit einem Thermometer, sondern mit einer RAMAN-Sonde, überwacht.

Eine RAMAN-Sonde wird verwendet, weil die RAMAN-Spektren nicht wie bei (N)IR-Spektren durch das Wasser bzw. Alkohol gestört werden (Hinweis: Die OH-Schwingungen sind sehr breit und überdecken die Spektren der gesuchten Riech- und Geschmacksstoffe). Die NIR-Geräte finden zwar verbreitet in der Weinanalytik Platz; aber dafür wird mit Hilfe von Computer die Spektren mehrfach gegeneinander verglichen und die Unterschiede (Substanzspektren) "errechnet", die für das Auge unsichtbar bleiben.

Die Daten zeigen, dass eine RAMAN-Sonde eine on-line-Überwachung der zweiten Destillation ermöglicht, wobei die Riech- und Geschmacksstoffe aufgefangen werden. Dies kann selbst durch weniger erfahrene bzw. nicht speziell ausgebildete Mitarbeiter bewerkstellig werden.

Wenn die bekannten Spektren des Ethanols und Wassers (jeder Anwender kann über sein (RAMAN)Spektrometer auch diese Spektren selbst erzeugen und archivieren) von den aktuellen Spektren der überdestillierenden Stoffe rechnerisch abgezogen werden, was heute bereits durch eine Standardsoftware (z.B. OriginLab) oder sogar visuell per Augenschein möglich ist, kann eine Steuersoftware leicht die Destillation der Duft- und Geschmacksstoffe automatisch überwachen.

Wie zuvor bereits erwähnt, können alternativ auch abgewandelte andere Verfahren zum Einsatz gelangen, , z.B. in Kombination ein Kapillar-Gaschromatograph verbunden mit einem kleinen Massenspektrometer eingesetzt werden, die auf dem Markt als kostengünstige Tischgeräte zur Verfügung stehen. Es hat sich überaschenderweise gezeigt, dass auch eine solche Kombination für den Echtzeiteinsatz in der vorliegenden Anwendung geeignet ist, auch hier wird dem Nutzer sofort anzeigt, wenn die Fraktion der Riechstoffe zu Ende destilliert worden sind und der Alkohol anfängt zu destillieren,

Im vorgestellten Ausführungsbeispiel besitzt die Füllkörperkolonne einen Durchmesser von ca. 2-5 cm bei einer Höhe von ca. 1-1,5 m. Die Füllkörperkolonne (26) ist wärmeisoliert.

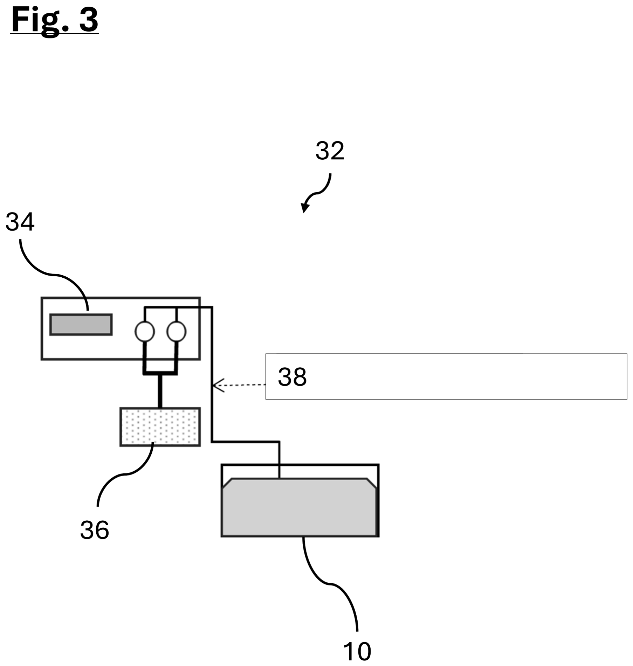

Durch die Verwendung eines Hochdruckzerstäubers (32) (siehe Fig. 3) oder eines Ultraschallgeräts zur Herstellung von Nanopartikel-Dispersionen kann darüber hinaus sichergestellt werden, dass die überwiegend lipophilen (wasserunlöslichen) Aromastoffe in dem alkoholfreien Wein bzw. einem anderen Ausgangsgetränk später dispers (in Form kleinster Tröpfchen) "in Lösung" gehen können.

Der Hochdruckzerstäuber (32) besitzt eine Hochdruckpumpe (34), die einen Druck bis zu 400 bar aufbauen kann und die später noch zu erörternden Aromafraktionen (36) über Kapillare (38) aus Edelstahl oder anderen geeigneten Werkstoffen, wie z.B. PEEK in den entalkoholisierten Wein/ das entalkoholisierte Getränk einstäubt und dabei fein dispergiert.

Obwohl, wie oben bereits angeführt, die Aromastoffe eigentlich kaum in Wasser löslich sind und deren Gehalt vergleichsweise eher gering ist, gelingt es, diese für das natürliche Weinaroma wichtigen Komponenten mit dem hier vorgestellten Verfahren in dem weitgehend ethanolfreien Wein wieder nahezu vollständig in Lösung zu bringen.

Beim Einsatz des Hochdruckzerstäubers (32) ist es dabei empfehlenswert, dass während des Prozesses die Weinvorlage kontinuierlich gerührt wird, damit die Dispersion der Aromastoffe in optimaler Weise erfolgen kann. Besonders hervorzuheben ist an dieser Stelle auch, dass es durch die hier angewandte Rektifikation und das separate Auffangen der jeweils wertgebenden Aromastoffe sogar möglich ist, die für jeweilige Rebsorte (z.B. "Riesling" oder "Cabernet Sauvignon") spezifischen Aromaprofile wieder zu rekonstituieren.

Alternativ zum Einsatz eines Hochdruckzerstäubers kann auch ein Ultraschallgerät zur Herstellung stabiler Nanopartikel-Dispersionen eingesetzt werden, um diese dann dem alkoholfreien Wein bzw. einem anderen Ausgangsgetränk wieder zuzusetzen.

Nachfolgend wird noch etwas detaillierter auf die unterschiedlichen Fraktionen eingegangen, die beim Rektifikationsschritt nach Fig. 2 gewonnen werden.

Weinaromen können in Abhängigkeit der jeweiligen Rebsorte und des Weinausbaus sowie der Lagerung z.B. beim sog. Barrique-Verfahren (Aufbewahrung des Weins in Eichenfässern oder bei der Verwendung sog. Eichenholz-Chips in Edelstahl-Containern) unterschiedliche Aromanoten entwickeln, die insbesondere mit verschiedenen Frucht- und Gewürznoten, blumigen Noten, aber auch Holz- und Röst-Aromaaspekten assoziiert werden:
- a): Vanille, Mokka, Tabak, Kakao (insbesondere bei Barriqueweinen)
- b): Beerenobstarten (Erdbeere, Brombeere, Himbeere, Johannisbeere, Heidelbeere)
- c): Pflaumen
- d): Holznoten (Eiche, Kastanie, Zeder)
- e): Schokolade
- f): Kirschen
- g): Gewürznoten (Zimt, Nelke, Ingwer, Muskatnuss)
- h): Paprika (bei unreifem Cabernet Sauvignon)

In diesem Zusammenhang kommt insbesondere den folgernden Wein-Aromastoffen eine besondere Bedeutung zu:
Alkohole: Geraniol (Rose), Phenylethanol (Rose) usw.
Ester: Ethylbutyrat, iso-Amylacetat (Banane), Undecalacton (Pfirsich), Ethylbutyrat usw.
Aldehyde: Anisaldehyd, Vanillin (Vanille), Diacetyl (Haselnuss, Butter), Linalool usw.
Terpenoide: Terpineol, Limonen (Zitrusfrüchte) usw.
Schwefelverbindungen: 4-Methoxy-2-methyl-2-butanthiol (schwarze Johannisbeere)
Pyrazine: Paprika

Um die während oder nach der angeführten Rektifikation in den einzelnen Fraktionen enthaltenen Aromastoffe zu erkennen bzw. zu differenzieren, wird in der Regel keine aufwendige Gaschromatographie-Analytik mit empfindlichen, selektiven Detektoren benötigt, sondern es reicht hierfür meist völlig aus, eine sensorische Bewertung von einer speziell geschulten Person durchführen zu lassen.

Die meisten, der für das Weinaroma relevanten Komponenten besitzen einen höheren Siedepunkt als Ethylacetat (77,1 °C). Es ist daher vorgesehen, die aus dem Wein destillativ abgetrennte Fraktion mittels Rektifikation in drei Unterfraktionen aufzuteilen:
Fraktion 1 enthält die zwischen 70 und 78, 3°C (+/-0,1 °C) relativ niedrig siedenden Fruchtester (bei Normaldruck)

Fraktion 2 enthält die größte Fraktion von reinem Ethanol bei einem Siedepunkt von 78,3 bis 78,4 °C (bei Normaldruck)

Fraktion 3 enthält die höher siedende Fraktion von 78,4 °C (+/-0,1 °C) bis 85 °C oder höher (bei Normaldruck) mit vielen Estern der höheren Alkohole oder andere Verbindungen wie z.B. Ethylbutyrat etc.

Um die Stabilität der oben aufgelisteten Verbindungen nicht zu beeinträchtigen, sollte auch diese Rektifikation bei vermindertem Druck (ca. 0,2 bar) und entsprechend niedriger Temperatur durchgeführt werden. Dabei bildet die 2. Fraktion volumenmäßig die größte Fraktion. Bei einem unbekannten Wein müssen auch dieser Fraktion in regelmäßigen Abständen Proben entnommen und diese sensorisch kontrolliert werden.

Wird dabei festgestellt, dass die Fraktion Nr. 2 bereits bestimmte Aromastoffe enthält, muss die Rektifikationsleistung durch Verkleinerung der in der Füllkörperkolonne eingefügten Glaskörper weiter verbessert werden (um auf diese Weise die Anzahl der "Theoretischen Böden" als Maß für die Trennleistung zu erhöhen). Üblicherweise sollten aber Füllkörper von ca. 3-5 mm) völlig ausreichen, um den gewünschten Trenneffekt zu erzielen.

Anzuführen ist noch, dass die Vor- und Nachlauf-Fraktionen mit ca. 1:1000 (bezogen auf die jeweilige Alkoholmenge) verhältnismäßig klein sind. Die Aromastoffe im Wein kommen meist in Mikrogramm-Mengen pro Liter vor. Allerdings liegen die Geruchsschwellenwerte der relevanten Aromastoffe oftmals auch sehr niedrig. Nachfolgend sind die Schwellenwerte ausgewählter Wein-Aromastoffe aufgeführt (Angaben in Wasser bei 20 °C, A. Fricker, Lebensmittel mit allen Sinnen prüfen, Seite 11, Springer-Verlag Berlin/Heidelberg, 1984):
Ethanol: 100mg/L; Iso-Butylalkohol: 75 mg/L; iso-Amylacetat: 0,2 mg/L; Propionsäure: 20 mg/L; iso-Valeriansäure: 0,7 mg/L; Geraniol: 0,13 mg/L; Hexanol: 0,7 mg/L; Linalooloxid: 3-6 mg/L;
Buttersäure: 0,7 mg/L; Methylmercaptan: 0,00002 mg/L; 2-Isobutyl-3-methoxypyrazin: 0,000002 mg/L.

Die erste und dritte Fraktion werden mit dem in Fig. 3 gezeigten und zuvor bereits erörterten Hochdruckzerstäuber (32) dem entalkoholisierten Wein wieder zugeführt, um den gewünschten alkoholfreien Wein mit verbessertem Aroma herzustellen. Das gewonnene Ethanol kann davon unabhängig vermarktet werden und enthält weniger Begleitelemente als bei bisherigen Verfahren.

Das beschriebene Verfahren kann auch zur Herstellung von aromareicheren alkoholfreien Getränken aus anderen alkoholischen Ausgangsprodukten als Wein eingesetzt werden.

Die Erfindung ist nicht auf eine der vorbeschriebenen Ausführungsformen beschränkt, sondern in vielfältiger Weise abwandelbar.

So können alkoholfreie Weine vor dem ersten Schritt der Entalkoholisierung einer sog. "malolaktischen" Zweit-Gärung unterworfen werden, damit etwa die Hälfte der weinspezifischen Säuren (nämlich die Äpfelsäure), im englischen "malic acid" genannt und durch eine zweite Gärung (entweder parallel oder später nach der ersten Gärung) mit einer Spezial-Hefe (heute als Standardmethode bereits großflächig (z.B. in der Schweiz angewendet) unter der Verlust von einem Molekül CO2 zu Milchsäure (lactic acid) umgesetzt wird, die nicht als "Säure oder sauer" wahrgenommen werden. Dies ist an sich bekannt.

Sämtliche aus den Ansprüchen und der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Weinprodukt
- 12: Kolonnensumpf
- 14: Sumpfkocher
- 16: Siebbodenkolonne
- 18: Kondensat/Kopfprodukt
- 20: Kopfkondensator
- 22: Rektifikationsanlage
- 24: Kolonnensumpf
- 26: Füllkörperkolonne
- 28: RAMAN-Sonde
- 30: Fraktionssammler
- 32: Hochdruckzerstäuber
- 34: Hochdruckpumpe
- 36: Aromafraktionen
- 38: Edelstahlkapillare

## Patentansprüche

1. Verfahren zur Herstellung von alkoholfreien Getränken, wobei zunächst aus einem alkoholhaltigen Ausgangsgetränk (10) der Alkohol unter Verwendung von Vakuumverdampfung als Destillat weitestgehend entfernt wird, so dass ein alkoholfreier Rückstand hergestellt wird, **dadurch gekennzeichnet, dass** das Alkoholdestillat mittels einer auf die Destillation folgenden Rektifikation (22) fraktioniert wird, wobei die Aromen des jeweiligen Ausgangsgetränks von dem Alkohol getrennt werden, indem das Alkoholdestillat in drei Fraktionen separiert wird, nämlich eine erste Fraktion mit einem Siedepunkt unterhalbe des Siedepunktes von Ethanol, eine zweite Fraktion mit einem dem Ethanol entsprechenden Siedepunkt bei 78,3 °C (+/- 0,2 °C bezogen auf Normaldruck) und eine dritte Fraktion mit einem Siedepunkt oberhalb des Siedepunktes von Ethanol, wobei die erste und die dritte Fraktion dem alkoholfreien Rückstand des Ausgangsgetränks wieder zugeführt werden.

2. Verfahren nach Anspruch 1, **dadurch gekennzeichnet, dass** der Siedepunkt der ersten Fraktion unterhalb 78,2°C (+/-0,1°C - bezogen auf Normaldruck) und der Siedepunkt der dritten Fraktion oberhalb 78,4 °C (+/-0,1 °C - bezogen auf Normaldruck) liegt.

3. Verfahren nach Anspruch 1 oder 2, **dadurch gekennzeichnet, dass** die erste Fraktion einen unteren Siedepunkt von ca. 70 °C (bezogen auf Normaldruck) und/oder die dritte Fraktion einen Siedepunkt von maximal ca. 85 °C (bezogen auf Normaldruck) aufweist.

4. Verfahren nach Anspruch 1, 2 oder 3, **dadurch gekennzeichnet, dass** die Rückführung der Aromafraktionen mittels Hochdruck- (32) und/oder Ultraschalldispersion durchgeführt wird.

5. Verfahren nach Anspruch 4, **dadurch gekennzeichnet, dass** mittels einer Hochdruckpumpe (34) ein Druck von bis zu 400 bar erzeugt wird und die rückzuführenden, separierten Aroma-Fraktionen mittels einer Düse zerstäubt und dem alkoholfreien Rückstand wieder zugeführt werden.

6. Verfahren nach Anspruch 4, **dadurch gekennzeichnet, dass** mittels eines Ultraschallgerätes Nanopartikel-Dispersion hergestellt und diese dem alkoholfreien Rückstand wieder zugeführt werden.

7. Verfahren nach Anspruch 5 oder 6, **dadurch gekennzeichnet, dass** der alkoholfreie Rückstand während des dispersen Rückführens der Aromafraktionen gerührt wird.

8. Verfahren nach einem der vorgehenden Ansprüche, **dadurch gekennzeichnet, dass** die Rektifikation mittels eines Spektroskopieverfahrens überwacht wird, wobei das Destillat der ersten und dritten Fraktion nur so lange zur späteren Zuführung zu dem alkoholfreien Rückstand des Ausgangsprodukts separiert wird, solange das für Ethanol charakteristischen optische Spektrum/Massenspektrum im Destillat nicht vorliegt.

9. Verfahren nach Anspruch 8, **dadurch gekennzeichnet, dass** in einer Software die bekannten optischen Spektren / Massenspektren des Ethanols und/oder Wassers hinterlegt und die die Spektren der Geruchs- und Geschmacksstoffe überdeckenden Anteile herausgerechnet werden, so dass durch kontinuierliche Auswertung der Vorgang der Destillation der Geruchs- und Geschmacksstoffe gesteuert und das Ethanoldestillat von den Geruchs- und Geschmacksstoffen separiert wird.

10. Verfahren nach Anspruch 8 oder 9, **dadurch gekennzeichnet, dass** zur Analyse eine RAMAN-Spektroskopie mit einer RAMAN-Sonde oder eine kombinierte Gaschromatographie/Massenspektroskopie eingesetzt wird, wobei die Rektifikation mittels der Analyse manuell oder mittels der Software nach Anspruch 7 überwacht und gesteuert wird.

11. Verfahren nach einem der vorhergehenden Ansprüche, **dadurch gekennzeichnet, dass** die Rektifikation unter einem verminderten Druck von ca. 0,1 bis 0,2 bar (absolut) und einem entsprechend verminderten Temperaturniveau durchgeführt wird.

12. Verfahren nach einem der vorhergehenden Ansprüche, **dadurch gekennzeichnet, dass** die Rektifikation in einer Füllkörperkolonne (26) durchgeführt wird.

13. Verfahren nach Anspruch 12, **dadurch gekennzeichnet, dass** die Füllkörperkolonne mit Glaskörpern, Keramikkörpern oder Metallkörpern befüllt ist.

14. Verfahren nach Anspruch 13, **dadurch gekennzeichnet, dass** die Füllkörperkörper als Ringkörper ausgebildet sind.

15. Verfahren nach Anspruch 12 bis 14, **dadurch gekennzeichnet, dass** die Füllkörper einen Durchmesser zwischen 1 und 5 mm aufweisen.
